# EUROPÄISCHE PATENTSCHRIFT

(11) **EP 1 724 490 B1**
(45) Veröffentlichungstag und Bekanntmachung des Hinweises auf die Patenterteilung: **25.03.2009**
(21) Anmeldenummer: 06001674.8
(22) Anmeldetag: 27.01.2006
(51) Int. Cl.: F16F 9/05, B60G 11/28

(54) **Tauchkolben mit Randverstärkung**
Plunger with rim reinforcement
Piston-plongeur avec renforcement du bord

(30) Priorität: 17.05.2005 DE 202005007933 U
(43) Veröffentlichungstag der Anmeldung: 22.11.2006
(73) Patentinhaber: SAF-HOLLAND GmbH, 63856 Bessenbach-Keilberg (DE)
(72) Erfinder: Koschinat, Hubert B., 63768 Hösbach (DE)
(74) Vertreter: KEIL & SCHAAFHAUSEN Patentanwälte

(56) Entgegenhaltungen:
- EP-A- 0 647 795
- EP-A- 0 914 976
- DE-A1- 10 020 765
- DE-A1- 19 702 155
- DE-B- 1 127 729
- US-A- 3 596 895
- US-A- 5 060 916
- US-A- 5 954 351
- US-B1- 6 386 524

## Beschreibung

Die Erfindung bezieht sich auf einen Tauchkolben, insbesondere für die Anbindung, Abstützung und Führung eines an einem Fahrgestell eines Fahrzeugs befestigbaren Luftfederbalges einer luftgefederten Fahrzeugachse an einem ebenfalls an dem Fahrgestell befestigbaren Längslenker, welcher einen Tauchkolbenmantel mit einem dem Längslenker zugewandten, vorzugsweise konisch verbreiterten Fußbereich aufweist, der der Abstützung auf dem Längslenker dient.

Aus der US 3,033,558 ist ein derartiger Tauchkolben bekannt, der in eine fest mit dem Längslenker verschraubte Aufnahme einsetzbar ist. Der Tauchkolben muss somit in einer vorgegebenen Position auf dem Längslenker befestigt werden. Zudem ist die zusätzliche Montage der Aufnahme mit erhöhtem Arbeitsund Logistikaufwand verbunden. In einigen Anwendungsfällen ist ein größerer seitlicher Versatz des Luftfederbalges und damit auch des Tauchkolbens gegenüber dem Längslenker erforderlich. Dies kann mit diesem bekannten Tauchkolben nicht realisiert werden.

In modernen Federungssystemen werden heute die Tauchkolben für Luftfederbälge aus Kunststoff hergestellt. Solche Tauchkolben sind z.B. aus Dokumenten US 5 060 916, US 6 386 524 und EP 0 647 795 bekannt. Bei einer standardmäßigen Anwendung liegen die Tauchkolben dabei mit ihrer offenen, lediglich verrippten Auflagefläche flächig auf dem Obergurt eines bspw. aus Blech gefertigten Längslenkers oder auf einer Platte auf, die auf einem Federlenker zur Auflage des Tauchkolbenrandes montiert ist. Wenn der Luftfederbalg und der Tauchkolben aufgrund spezieller Einbauanforderungen seitlich gegenüber dem Längslenker versetzt angeordnet werden müssen, ragt der Rand des Tauchkolbens teilweise großflächig über die Kante des Längslenkers hinaus. Das überragende Segment des Tauchkolbens ist somit nicht mehr von dem Längslenker unterstützt. In Kombination mit einer hohen Fahrzeugbeanspruchung, die bspw. durch Überladungen, Geländeeinsatz, Kipperbetrieb etc. auftreten kann, ist es möglich, dass der relativ weiche Werkstoff des Tauchkolbens in Folge der in der Kante des Längslenkers auftretenden Materialbeanspruchung an dieser Stelle zum Fließen kommt (Tischkanteneffekt). Dies kann zu einem Einschneiden der Kante des Längslenkers in den Tauchkolben und schließlich zu einer Rissbildung bis hin zur Zerstörung des Tauchkolbens führen.

Wenn zwischen dem Tauchkolben und dem Längslenker eine zusätzliche Platte montiert wird, kann zwar die auf die Unterseite des Tauchkolbens wirkende Belastung an der Kante des Längslenkers reduziert werden, dies führt jedoch nicht nur zu höheren Kosten für die zusätzliche Platte, sondern bringt auch einen gesteigerten Logistik- und Montageaufwand mit sich.

Aufgabe der vorliegenden Erfindung ist es daher, einen Tauchkolben der eingangs genannten Art so auszugestalten, dass dieser leicht montierbar ist und gleichzeitig eine hohe Widerstandsfähigkeit gegen Beschädigungen aufweist.

Diese Aufgabe wird erfindungsgemäß im Wesentlichen dadurch gelöst, dass der Fußbereich des Tauchkolbenmantels mit einer nur mit diesem verbunden, insbesondere ringförmigen Verstärkung versehen ist. Da die Verstärkung bereits mit dem Tauchkolben verbunden ist, ist bei der Montage lediglich der Tauchkolben in an sich bekannter Weise auf dem Längslenker oder dgl. zu befestigen, ohne dass dies zusätzlichen Montageaufwand mit sich bringt. Gleichzeitig wird durch die Verstärkung der Tauchkolben an einer für das Materialversagen kritischen Stelle gezielt unterstützt, so dass auch bei hoher Fahrzeugbeanspruchung keine Beschädigung der Unterseite des Tauchkolbens auftritt.

Wenn der Tauchkolbenmantel und dessen Fußbereich aus einem Kunststoff bestehen, wird es bevorzugt, dass die Verstärkung aus einem metallischen und/oder faserverstärkten Werkstoff besteht. Dabei kann die Verstärkung standflächenseitig in den Fußbereich des Tauchkolbenmantels wenigstens bereichsweise eingelassen, eingeformt, eingegossen, eingelegt und/oder eingeclipst sein. Die Verstärkung kann auf diese Weise unmittelbar bei der Herstellung des Tauchkolbens an diesem vorgesehen sein, so dass eine nachträgliche Bearbeitung nicht erforderlich ist. Alternativ können Tauchkolben auch gezielt durch das nachträgliche Aufbringen einer derartigen Verstärkung an den bei hoher Fahrzeugbeanspruchung kritischen Stellen unterstützt werden.

Nach einer bevorzugten Ausführungsform der Erfindung ist die Verstärkung in einer umlaufenden Aussparung aufgenommen, welche zumindest bereichsweise Querschnittseinengungen aufweist, die derart kleiner als der Querschnitt der Verstärkung sind, dass die Verstärkung unter elastischer Verformung der Querschnittseinengungen in die umlaufende Aussparung einrastbar ist. Dies ermöglicht es, die Verstärkung besonders einfach nachträglich an einem erfindungsgemäßen Tauchkolben vorzusehen, d.h. erst dann, wenn bspw. durch ein Versetzen des Tauchkolbens relativ zu dem Längslenker eine Verstärkung vorgesehen werden muss, um Beschädigungen an dem Tauchkolben zu vermeiden.

Nach einer weiteren Ausführungsform der Erfindung ist die Verstärkung durch einen sich zumindest näherungsweise konzentrisch zu dem Tauchkolbenmantel erstreckenden und in den Fußbereich des Tauchkolbenmantels integrierten, z.B. flachen oder im Querschnitt L-förmigen Blechstreifen oder aus einem im Querschnitt runden Strangmaterial, z.B. Draht, gebildet. Hierbei wird es bevorzugt, wenn die Verstärkung insbesondere durch formschlüssiges Verhaken ihrer Enden einen geschlossenen Ring bildet.

Zur sicheren Verbindung der Verstärkung mit dem Tauchkolben können in der Verstärkung mehrere Öffnungen oder dgl. Profilierungen vorgesehen sein. Die Verstärkung kann dann vor der Herstellung des Tauchkolbens in eine Spritzgussform eingelegt werden, so dass sich die Verstärkung während der Herstellung des Tauchkolbens fest mit diesem verbindet.

Für die Aufnahme der insbesondere bei hoher Fahrzeugbeanspruchung auf den Tauchkolben wirkenden Kräfte hat es sich als vorteilhaft erwiesen, wenn die Verstärkung durch ein zu einem Ring geformtes L-Profil gebildet ist, dessen einer Profilschenkel wenigstens einen Teil der Aufstandsfläche des Tauchkolbenmantels bildet.

In Weiterbildung dieses Gedankens kann die Verstärkung durch ein nach radial innen offenes L-Profil gebildet sein, dessen weiterer Profilschenkel in dem Fußbereich des Tauchkolbenmantels verklemmt und/oder eingegossen ist. Alternativ hierzu kann die Verstärkung auch durch ein nach radial außen offenes L-Profil gebildet sein, dessen weiterer Profilschenkel in dem Fußbereich des Tauchkolbenmantels verklemmt und/oder eingegossen ist.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

### Es zeigen schematisch:

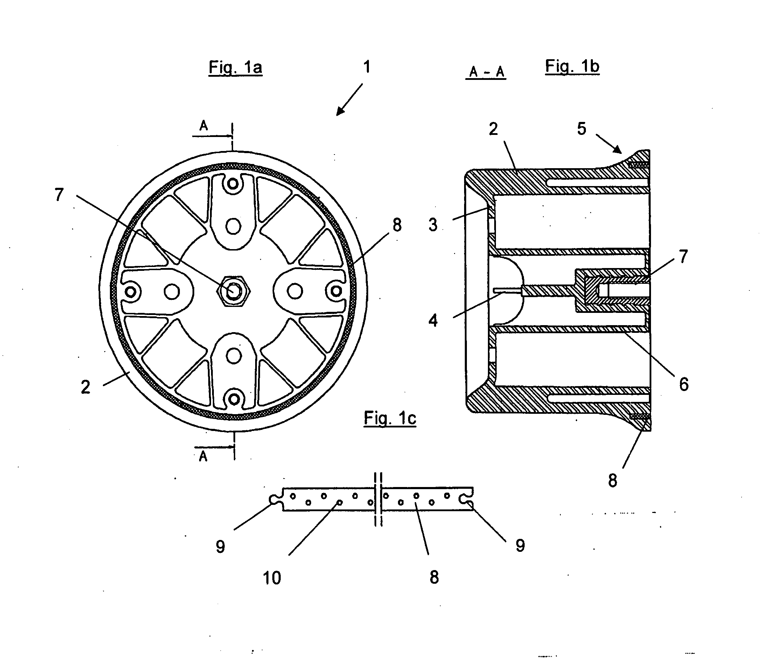

- Fig. 1 a: eine Draufsicht auf den Fußbereich eines erfindungsgemäßen Tauchkolbens nach einer ersten Ausführungsform,
- Fig. 1b: einen Schnitt durch den Tauchkolben nach Fig. 1 a entlang der Linie A-A,
- Fig. 1 c: die Verstärkung des Tauchkolbens nach Fig. 1 a,
- Fig. 2a: eine Draufsicht auf den Fußbereich eines erfindungsgemäßen Tauchkolbens nach einer zweiten Ausführungsform,
- Fig.2b: einen Schnitt durch den Tauchkolben nach Fig. 2a entlang der Linie A-A,
- Fig. 2c: in vergrößerter Detailansicht den Fußbereich des Tauchkolbens nach Fig. 2b,
- Fig. 2d: in vergrößerter Detailansicht den Fußbereich eines Tauchkolbens nach einer weiteren Ausführungsform,
- Fig. 3a: eine Draufsicht auf den Fußbereich eines erfindungsgemäßen Tauchkolbens nach einer vierten Ausführungsform,
- Fig. 3b: einen Schnitt durch den Tauchkolben nach Fig. 3a entlang der Linie A-A und
- Fig. 3c: in vergrößerter Detailansicht den Fußbereich des Tauchkolbens nach Fig. 3b.

Der in den Figuren dargestellte Tauchkolben 1 besteht bspw. aus Kunststoff und ist topfförmig gestaltet mit einem zumindest näherungsweise zylindrischen Tauchkolbenmantel 2 und einem Tauchkolbenboden 3, an welchem Befestigungsmittel 4 zur Fixierung eines nicht dargestellten Luftfederbalges vorgesehen sind. Der Tauchkolbenmantel 2 verbreitert sich in den dargestellten Ausführungsformen auf seiner dem Tauchkolbenboden 3 abgewandten Seite zu einem Fußbereich 5 des Tauchkolbenmantels 2. In dem durch den Tauchkolbenmantel 2 und den Tauchkolbenboden 3 gebildeten Innenraum des Tauchkolbens 1 sind zur Versteifung mehrere einstückig mit dem Tauchkolben 1 ausgebildete Rippen oder Wände 6 vorgesehen. Weiter ist auf der dem Tauchkolbenboden 3 abgewandten Seite des Tauchkolbens 1 eine Einrichtung 7 zum Befestigen des Tauchkolbens 1 auf einem ebenfalls nicht dargestellten Längslenker oder dgl. angeordnet.

Beim Einbau des Tauchkolbens 1 zur Anbindung, Abstützung und Führung eines an einem Fahrgestell befestigbaren Luftfederbalkens stützen sich die dem Tauchkolbenboden 3 abgewandten Flächen des Fußbereichs 5 sowie der Wände 6 zumindest teilweise auf dem Längslenker oder einem Federlenker ab. Damit bei hoher Fahrzeugbeanspruchung diese aus Kunststoff bestehende Aufstandsfläche des Tauchkolbens 1 nicht durch einen sogenannten "Tischkanteneffekt" an der Kante des Längslenkers oder dgl. beschädigt wird, wenn der Tauchkolben 1 nicht vollständig auf dem Längslenker oder dgl. aufliegt, ist in der in den Fig. 1 a und 1 b dargestellten Ausführungsform eine Verstärkung 8 in den Fußbereich 5 des Tauchkolbenmantels 2 eingebracht.

Die Verstärkung 8 ist durch ein in Fig. 1c dargestelltes bandartiges Element gebildet, welches an seinen Enden eine Einrichtung 9 zum formschlüssigen Verhaken aufweist, so dass die Verstärkung 8 im Wesentlichen ringförmig ist. Auf diese Weise kann die Verstärkung 8 in eine Spritzgussform eingelegt werden und sich bei der Herstellung des Tauchkolbens 1 fest mit dem Kunststoff des Fußbereichs 5 des Tauchkolbenmantels 2 verbinden. Zur sicheren Verbindung sind in der Verstärkung 8 mehrere Löcher 10 vorgesehen, durch welche das Kunststoffmaterial fließen kann, um die Verstärkung 8 in dem Fußbereich 5 zu fixieren. Alternativ zu den Löchern 10 kann auch eine andere Profilierung der Verstärkung 8 vorgesehen sein.

Die aus einem härteren Material, bspw. aus Metall, bestehende Verstärkung 8 ist in der in Fig. 1 a und 1 b dargestellten Ausführungsform im Wesentlichen konzentrisch zu dem Tauchkolbenmantel 2 ausgerichtet. Erfindungsgemäß kann die Verstärkung 8 jedoch auch in einer anderen Position oder Ausrichtung mit dem Fußbereich 5 des Tauchkolbens 1 verbunden sein. Dabei muss die Verstärkung 8 nicht in den Fußbereich 5 eingegossen sein, sondern kann auch in diesen eingelassen, eingeformt, eingelegt, eingeklemmt oder dgl. sein.

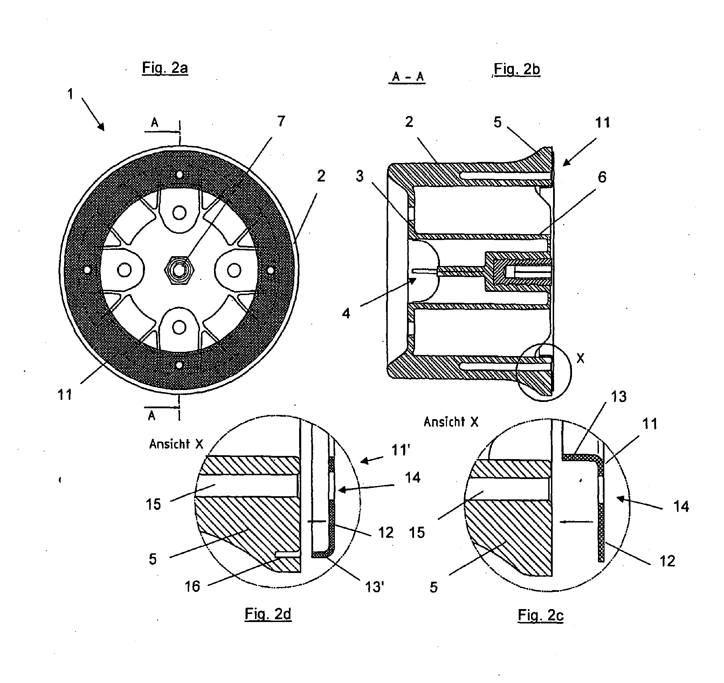

Die Fig. 2a bis 2c zeigen eine zweite Ausführungsform der Erfindung, bei welcher der Tauchkolben 1 im Wesentlichen den oben unter Bezugnahme auf die Fig. 1 a und 1 b beschriebenen Aufbau hat. Zur Unterstützung der Aufstandsfläche des Tauchkolbens 1 ist bei der zweiten Ausführungsform eine Verstärkung 11 vorgesehen, die durch ein zu einem Ring geformtes L-Profil aus Metall oder dgl. gebildet ist. Dabei erstreckt sich ein erster Profilschenkel 12 der Verstärkung 11 zumindest näherungsweise parallel zu der Aufstandsfläche des Tauchkolbens 1 ausgerichtet. Der erste Profilschenkel 12 überdeckt den Fußbereich 5 des Tauchkolbenmantels 2 dabei zumindest bereichsweise auf der dem Tauchkolbenboden 3 abgewandten Seite des Tauchkolbens 1.

Die Verstärkung 11 ist als ein nach radial außen offenes L-Profil ausgebildet, dessen weiterer Profilschenkel 13 in Richtung auf den Tauchkolbenboden 3 zu verläuft. Der zweite Profilschenkel 13 ist dabei mit dem Fußbereich 5 des Tauchkolbenmantels 2 oder mit Rippen oder Wänden 6 des Tauchkolbens 1 verklemmt, verklebt oder in anderer geeigneter Weise verbunden.

Wie insbesondere aus den Darstellungen der Fig. 2a und 2c ersichtlich ist, können in dem ersten Profilschenkel 12 der Verstärkung 11 Durchgangsbohrungen 14 vorgesehen sein, die mit entsprechenden Öffnungen 15 in dem Tauchkolben 1 in Überdeckung sind.

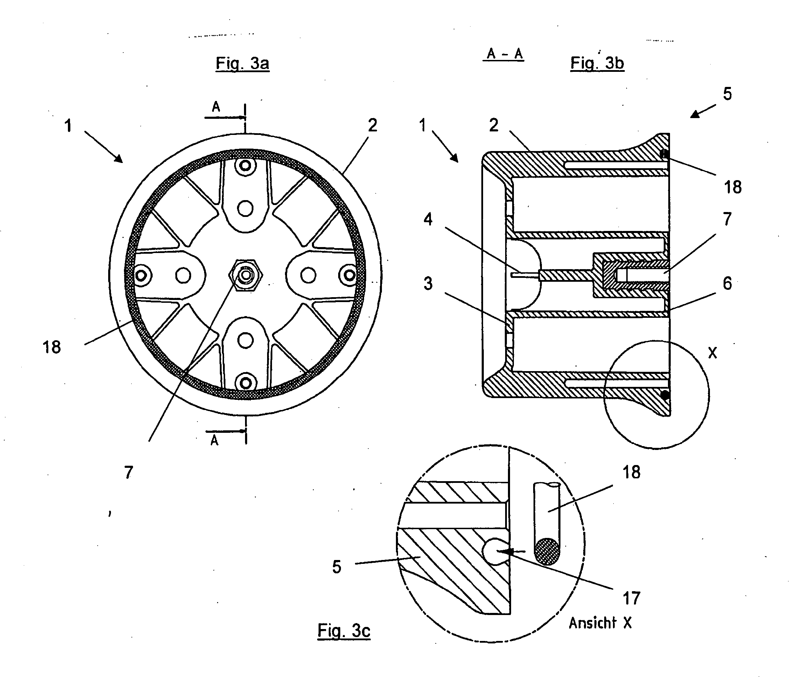

In Fig. 3d ist eine Abwandlung dieser zweiten Ausführungsform dargestellt, bei welcher die Verstärkung 11' ebenfalls ein zu einem Ring geformtes L-Profil aus Metall oder dgl. ist. Die Verstärkung 11' ist jedoch als ein nach radial innen offenes L-Profil ausgebildet, wobei der erste Profilschenkel 12 wiederum an der Aufstandsfläche des Tauchkolbens 1 anliegt bzw. diese ausbildet. Der zweite Profilschenkel 13' dieser Verstärkung 11' ist in eine umlaufenden Ringnut 16 einsetzbar, die in dem Fußbereich 5 des Tauchkolbenmantels 2 ausgebildet ist. Der zweite Profilschenkel 13' kann dabei in der Ringnut 16 eingeklebt, eingeschweißt, eingegossen, eingeklemmt, oder dgl. sein. Die in den Fig. 2a bis 2d dargestellten Verstärkung 11 bzw. 11' können dabei entweder bereits während der Herstellung des Tauchkolbens 1 mit diesem verbunden werden oder erst nachträglich an diesem angebracht werden, wenn dies aufgrund der Montagesituation des Tauchkolbens 1 an einem nicht dargestellten Längslenker oder dgl. erforderlich wird.

Eine weitere Ausführungsform der Erfindung, bei welcher der Tauchkolben 1 wiederum im Wesentlichen den oben unter Bezug auf die Fig. 1 a und 1 b erläuterten Aufbau hat, ist in den Fig. 3a bis 3c dargestellt. Im Fußbereich 5 des Tauchkolbens 1 ist eine umlaufende, nutartige Aussparung 17 vorgesehen, in welche ein Ring 18 als Verstärkung eingelegt werden kann. Die Aussparung 17 weist dabei zumindest bereichsweise Querschnittseinengungen auf, die derart kleiner als der Querschnitt der Verstärkung 18 sind, dass diese unter elastischer Verformung der Querschnittseinengungen in die umlaufende Aussparung 17 einrastbar ist. In der dargestellten Ausführungsform ist die Verstärkung 18 durch einen Ring gebildet, der im Querschnitt kreisförmig ist. Es lassen sich jedoch auch andere im Querschnitt nicht kreisförmige Verstärkungen einsetzen, die in die umlaufende Aussparung 17 einrastbar sind.

### Bezugszeichenliste

- 1: Tauchkolben
- 2: Tauchkolbenmantel
- 3: Tauchkolbenboden
- 4: Befestigungsmittel
- 5: Fußbereich des Tauchkolbenmantels
- 6: Rippe/Wand
- 7: Einrichtung zum Befestigen des Tauchkolbens
- 8: Verstärkung
- 9: Einrichtung zum formschlüssigen Verhaken
- 10: Loch
- 11, 11': Verstärkung
- 12: erster Profilschenkel
- 13, 13': zweiter Profilschenkel
- 14: Durchgangsbohrung
- 15: Öffnung
- 16: Ringnut
- 17: umlaufende Aussparung
- 18: ringartige Verstärkung

## Patentansprüche

1. Tauchkolben, insbesondere für die Anbindung, Abstützung und Führung eines an einem Fahrgestell eines Fahrzeugs befestigbaren Luftfederbalges einer luftgefederten Fahrzeugachse an einem ebenfalls an dem Fahrgestell befestigbaren Längslenker, welcher einen Tauchkolbenmantel (2) mit einem dem Längslenker zugewandten, vorzugsweise konisch verbreiterten Fußbereich (5) aufweist, welcher der Abstützung auf dem Längslenker dient, **dadurch gekennzeichnet, dass** der Fußbereich (5) des Tauchkolbenmantels (2) mit einer nur mit diesem verbundenen, insbesondere ringförmiges Verstärkung (8, 11, 11', 18) versehen ist.

2. Tauchkolben nach Anspruch 1, **dadurch gekennzeichnet, dass** der Tauchkolbenmantel (2) und dessen Fußbereich (5) aus einem Kunststoff und die Verstärkung (8, 11, 11', 18) aus einem metallischen und/oder faserverstärkten Werkstoff bestehen.

3. Tauchkolben nach Anspruch 1 oder 2, **dadurch gekennzeichnet, dass** die Verstärkung (8, 11, 11', 18) standflächenseitig in den Fußbereich (5) wenigstens bereichsweise eingelassen, eingeformt, eingegossen, eingelegt oder eingeclipst ist.

4. Tauchkolben nach einem der Ansprüche 1 bis 3, **dadurch gekennzeichnet, dass** die Verstärkung (18) in einer umlaufenden Aussparung (17) aufgenommen ist, welche zumindest bereichsweise Querschnittseinengungen aufweist, die derart kleiner als der Querschnitt der Verstärkung (18) sind, dass die Verstärkung (18) unter elastischer Verformung der Querschnittseinengungen in die umlaufende Aussparung (17) einrastbar ist.

5. Tauchkolben nach einem der Ansprüche 1 bis 4, **dadurch gekennzeichnet, dass** die Verstärkung durch einen sich zumindest näherungsweise konzentrisch zu dem Tauchkolbenmantel (2) erstreckenden und in den Fußbereich (5) des Tauchkolbenmantels (2) integrierten, bspw. flachen oder im Querschnitt L-förmigen, Blechstreifen (8, 11, 11') oder aus einem im Querschnitt runden Strangmaterial (18), bspw. aus Draht, gebildet ist.

6. Tauchkolben nach einem der Ansprüche 1 bis 5, **dadurch gekennzeichnet, dass** die Verstärkung (8, 11, 11', 18), insbesondere durch formschlüssiges Verhaken seiner Enden, einen geschlossenen Ring bildet.

7. Tauchkolben nach einem der Ansprüche 1 bis 6, **dadurch gekennzeichnet, dass** die Verstärkung (8, 11, 11', 18) mehrere Öffnungen (10) oder dgl. Profilierungen aufweist.

8. Tauchkolben nach einem der Ansprüche 1 bis 7, **dadurch gekennzeichnet, dass** die Verstärkung (8, 11, 11', 18) durch ein zu einem Ring geformtes L-Profil (11, 11') gebildet ist, dessen einer Profilschenkel (12) wenigstens einen Teil der Aufstandsfläche des Tauchkolbenmantels (2) bildet.

9. Tauchkolben nach Anspruch 8, **dadurch gekennzeichnet, dass** die Verstärkung durch ein nach radial innen offenes L-Profil (11') gebildet ist, dessen weiterer Profilschenkel (13') in dem Fußbereich (5) des Tauchkolbenmantels (2) verklemmt und/oder eingegossen ist.

10. Tauchkolben nach Anspruch 8, **dadurch gekennzeichnet, dass** die Verstärkung durch ein nach radial außen offenes L-Profil (11) gebildet ist, dessen weiterer Profilschenkel (13) in dem Fußbereich (5) des Tauchkolbenmantels (2) verklemmt und/oder eingegossen ist.

## Claims

1. A plunger, more preferably for the tying, supporting and guiding of an air spring bellows of an air sprung vehicle axle that can be fastened to a chassis of a vehicle on a trailing arm that can likewise be fastened to the chassis, which trailing arm comprises a plunger jacket (2) with a preferentially conically widened foot region (5) facing the trailing arm, which serves for the support on the trailing arm, **characterized in that** the foot region (5) of the plunger jacket (2) is provided with a ring-shaped reinforcement (8, 11, 11', 18) which is only connected with said jacket.

2. The plunger according to Claim 1, **characterized in that** the plunger jacket (2) and its foot region (5) consist of a plastic and the reinforcement (8, 11, 11', 18) of a metal and/or fibre-reinforced material.

3. The plunger according to Claim 1 or 2, **characterized in that** the reinforcement (8, 11, 11', 18) on the standing surface side at least in regions is sunk, moulded into, cast into, placed into or clipped into the foot region (5).

4. The plunger according to any one of the Claims 1 to 3, **characterized in that** the reinforcement (18) is accommodated in a circumferential clearance (17) which at least in regions comprises cross-sectional constrictions which are smaller than the cross section of the reinforcement (18) in such a manner that the reinforcement (18) subject to elastic deformation of the cross-sectional constrictions can be engaged in the circumferential clearance (17).

5. The plunger according to any one of the Claims 1 to 4, **characterized in that** the reinforcement is formed of a plate strip (8, 11, 11') which is e.g. flat or L-shaped in cross section or of an extruded material (18) which is round in cross section, for example of wire, with the plate strip or the extruded material extending at least approximately concentrically to the plunger jacket (2) and being integrated in the foot region (5) of the plunger jacket (2).

6. The plunger according to any one of the Claims 1 to 5, **characterized in that** the reinforcement (8, 11, 11', 18) more preferably through positive hooking together of its ends forms a closed ring.

7. The plunger according to any one of the Claims 1 to 6, **characterized in that** the reinforcement (8, 11, 11', 18) comprises a plurality of openings (10) or similar profilings.

8. The plunger according to any one of the Claims 1 to 7, **characterized in that** the reinforcement (8, 11, 11', 18) is formed through an L-profile (11, 11') shaped into a ring the one profile leg (12) of which forms at least one part of the support surface of the plunger jacket (2).

9. The plunger according to Claim 8, **characterized in that** the reinforcement is formed through an L-profile (11') which is open radially to the inside, the further profile leg (13') of which is jammed and/or cast into the foot region (5) of the plunger jacket (2).

10. The plunger according to Claim 8, **characterized in that** the reinforcement is formed through an L-profile (11) which is open radially to the outside, the further profile leg (13) of which is jammed and/or cast into the foot region (5) of the plunger jacket (2).

## Revendications

1. Piston plongeur, notamment pour relier, soutenir et guider un soufflet pneumatique d'un essieu de véhicule sur suspension d'air susceptible d'être fixé sur un châssis d'un véhicule, sur un bras oscillant longitudinal également susceptible d'être fixé sur le châssis, qui comporte une enveloppe de piston plongeur (2) avec une zone de base (5) faisant face au bras oscillant longitudinal, s'élargissant de préférence sous forme conique, servant au soutien sur le bras oscillant longitudinal, **caractérisé en ce que** la zone de base (5) de l'enveloppe de piston plongeur (2) est munie d'un renfort (8, 11, 11', 18) notamment de forme annulaire, relié uniquement à cette dernière.

2. Piston plongeur selon la revendication 1, **caractérisé en ce que** l'enveloppe de piston plongeur (2) et la zone de base (5) de cette dernière sont composées d'une matière plastique et **en ce que** le renfort (8, 11, 11', 18) est composé d'une matière métallique et/ou renforcée par fibres.

3. Piston plongeur selon la revendication 1 ou 2, **caractérisé en ce que** du côté de l'embase, le renfort (8, 11, 11', 18) est enchâssé, moulé, coulé, inséré ou clipsé au moins par zones dans la zone de base (5).

4. Piston plongeur selon l'une quelconque des revendications 1 à 3, **caractérisé en ce que** le renfort (18) est réceptionné dans un évidement (17) périphérique, qui comporte au moins par zones des rétrécissements de la section transversale, qui sont plus petits que la section transversale du renfort (18), de sorte que le renfort (18) soit susceptible de s'enclencher dans l'évidement (17) périphérique, sous déformation élastique des rétrécissements de la section transversale.

5. Piston plongeur selon l'une quelconque des revendications 1 à 4, **caractérisé en ce que** le renfort est formé d'une bande de tôle (8, 11, 11') par exemple plate ou de section transversale en forme de L, s'étendant sous forme au moins approximativement concentrique vers l'enveloppe du piston plongeur (2) et intégrée dans la zone de base (5) de l'enveloppe du piston plongeur (2), ou d'une matière en tronçon (18), de section transversale ronde, par exemple en fil métallique.

6. Piston plongeur selon l'une quelconque des revendications 1 à 5, **caractérisé en ce que** le renfort (8, 11, 11', 18) forme un anneau fermé, notamment par accrochage par complémentarité de forme de ses extrémités.

7. Piston plongeur selon l'une quelconque des revendications 1 à 6, **caractérisé en ce que** le renfort (8, 11, 11', 18) comporte plusieurs ouvertures (10) ou profilages similaires.

8. Piston plongeur selon l'une quelconque des revendications 1 à 7, **caractérisé en ce que** le renfort 8, 11, 11', 18) est formé d'un profilé en L (11, 11') façonné en anneau, dont l'une des branches de profilé (12) forme au moins une partie de l'embase de l'enveloppe de piston plongeur (2).

9. Piston plongeur selon la revendication 8, **caractérisé en ce que** le renfort est formé d'un profilé en L (11') ouvert vers l'intérieur en direction radiale, dont l'autre branche de profilé (13') est serrée et/ou coulée dans la zone de la base (5) de l'enveloppe de piston plongeur (2).

10. Piston plongeur selon la revendication 8, **caractérisé en ce que** le renfort est formé d'un profilé en L (11) ouvert vers l'extérieur en direction radiale, dont l'autre branche de profilé (13) est serrée et/ou coulée dans la zone de la base (5) de l'enveloppe de piston plongeur (2).
